# EUROPÄISCHE PATENTANMELDUNG

(11) **EP 2 562 672 A1**
(43) Veröffentlichungstag der Anmeldung: **27.02.2013**
(21) Anmeldenummer: 12176628.1
(22) Anmeldetag: 17.07.2012
(51) Int. Cl.: G06F 21/30

(54) **Terminal mit integrierter Identifikations-, Bezahl-, Ticketing und Energiemanagement-Funktion zum Betrieb mit einem über ein Weitverkehrsnetz verbundenen Rechenzentrum**

(30) Priorität: 22.08.2011 DE 102011115867
(71) Anmelder: Cubical GmbH, 01239 Dresden (DE)
(72) Erfinder: Schecker, Thomas, 64832 Babenhausen (DE)
(74) Vertreter: Meissner, Bolte & Partner

(57) **Zusammenfassung**

Terminal zur Verbindung von lokalen Endgeräten (z.B. Bildschirm, Tastatur, Maus und Drucker) und einem über ein Weitwegenetz angeschlossenes Rechenzentrum, welches die Funktionen eines lokalen DeskTop-PC vollwertig simuliert. Das Terminal verfügt über keinerlei bewegliche Bauteile und zeichnet sich durch eine vollständige Virtualisierung der lokalen Terminalfunktionen aus. Das gesamte System kann zentral gesteuert, konfiguriert und gewartet werden. Das Terminal erlaubt eine Identifikation des Nutzers, die Authorisierung von Bezahlvorgängen sowie die Erzeugung von papierlosen Tickets über ein integriertes Nahfeld-Kommunikations-System gemäß NFC-Standard (Near Field Communication). Darüber hinaus erlaubt es die drahtlose Kommuni-kation mit Systemen der Heizung, Klima und Gebäudetechnik, sowie der Zutrittskontrolle über ein geeignetes ISM-Band (Industrial, Scientific and Medical-Band).

## Beschreibung

Die Erfindung betrifft ein Terminal basierend auf einem System zur zentralen Steuerung, Verwaltung, Wartung, und Migration von geographisch verteilten Terminals über ein Weitverkehrsnetz durch ein Rechenzentrum , welches eine zentrale IT-Funktionalität an eine größere Anzahl Nutzer verteilt und dabei das Vorhanden sein eines lokalen Desktop-PC's vor Ort simuliert. Das erfindungsgegenständliche Terminal ist hinsichtlich Grafik, Grafikgeschwindigkeit, Ansprechzeiten und Rechnerleistung nicht von einem lokalen Desktop-PC bzw. Fat Client zu unterschieden.

Derartige Geräte werden bereits heute angeboten und als Thin Client, Ultra Thin Client oder Zero Client bezeichnet. Unter einem Thin Client versteht man in der Regel einen Desktop-Computer ohne bewegliche Teile, beispielsweise Festplatten, CD-Laufwerke oder Lüfter. Ein Thin Client wird im Gegensatz zu einem Fat Client bzw. herkömmlichen Desktop-PC über eine zentrale Verwaltungssoftware konfiguriert und administriert.

Vorteil von Thin Clients gegenüber Fat Clients ist der einfachere Betrieb. Auf dem Thin Client läuft nur die Software, die für den Zugriff auf zentral betriebene Anwendungen benötigt wird. Die Basissoftware kann unabhängig von den Anwendungen, die tatsächlich genutzt werden, einheitlich betrieben werden. Thin Clients ermöglichen durch zentrale und dezentrale Steuerungssysteme ein sehr einfaches Management. Daher sind Thin Clients im Betrieb kostengünstiger als konventionelle Desktop-PC's. Durch den Verzicht auf bewegliche Teile sollte auch die Hardware der Thin Clients günstiger sein. Dies ist sie aber in der Regel nicht, da die Hersteller den Vorteil der geringeren Betriebskosten gleich mit einkalkulieren.

Auch ist ein wesentlich geringerer Stromverbrauch bei den Thin Clients die Regel. So verbraucht ein Standard-Gerät zwischen 10 und 20 Watt. Konventionelle Desktop-Geräte liegen in einer Bandbreite zwischen 50 und 120 Watt. Die Thin Clients erzeugen weniger Abwärme und entlasten damit die Klimaanlagen in den Bürogebäuden. Die Nutzungsdauer eines Thin Client liegt bei durchschnittlich 7 Jahren, ein herkömmlicher PC wird nur drei bis vier Jahre genutzt.

Die vorliegende Erfindung beschreibt ein Terminal, dessen Firmware und CPU auf einen minimalen Funktionsumfang reduziert wurde und welches über geeignete Systeme zur beschleunigten Datenübertragung sämtliche IT-Funktionen aus einem über ein Weitverkehrsnetz angeschlossenen Rechenzentrum "einschleift".

Gleichzeitig bietet das Gerät zwei weitere integrierte drahtlose Kommunikationssysteme welche es für den Einsatz an einem Point-of-Sale prädestinieren:
Das erfindungsgegenständliche Terminal enthält ein Kommunikationssystem gemäß NFC-Standard, welches die Identifizierung des Nutzers durch sein Mobiltelefon erlaubt. Zu diesem Zweck wird das Mobiltelefon auf das Gehäuse des Terminals gelegt. In einer vorteilhaften Ausführung ist das Gehäuse als Quader mit einer gleichmäßigen Kantenlänge von mindestens 10 Zentimetern ausgeführt und besteht aus Metall. Die Antennenfunktion ist in diesem Fall in das Gehäuse integriert.

Für Bezahlfunktionen oder die Erzeugung eines papierlosen Tickets wird das Mobiltelefon des Kunden jeweils auf das Terminal gelegt und durch die unmittelbare Paarung der beiden NFC-Komponenten der Vorgang vollzogen. Die Paarung kann mit Hilfe von aktiven oder passiven Transmittern erfolgen. Vorraussetzung für die zuvor beschriebenen Funktionen ist, das Nutzer und Kunde NFC-fähige Mobiltelefone verwendet wie zum Beispiel Blackberry Bold 9900, Google Nexus oder Nokia C7.

Das erfindungsgegenständliche Terminal vereint damit die geringen Betriebskosten eines "virtuellen" PC mit einem komfortablen und sicheren Identifikationsvorgang sowie einer papierlosen Bezahl- und Ticketing-Funktion. Es ist damit hervorragend geeignet für Verkaufsschalter von Verkehrsbetrieben, Reisebüros, Fluglinien, Eisenbahn-Gesellschaften aber auch Theatern, Konzerthäusern und Kinos.

Darüber hinaus ist in das Terminal eine Kommunikationsfunktion integriert, welche eine drahtlose Verbindung zu den lokalen Systemen der Haus-, Heizung- und Klimatechnik aufbauen kann. In einer vorteilhaften Ausführung nutzt diese Funktion eine ISM-Sendefrequenz, z.B. 433 MHz oder 868 MHz.

Eine Besonderheit gegenüber heute erhältlichen NFC-Endgeräten stellt das metallische Gehäuse des Terminals dar, welches als Antenne in die Funktechnologie einbezogen wird und über eine spezielle Anpassung in der Lage ist die vorgegebene NFC-Frequenz von 13,56 MHz über die maximal zulässige Distanz von 10 Zentimetern noch weiter einzuschränken und damit die Sicherheit gegen unerlaubtes "Mithören" nochmals zu erhöhen.

In Summe steht mit dem erfindungsgegenständlichen Terminal ein Endgerät zur Verfügung welches die geringen Hardware- und Betriebskosten eines Thin Client mit modernen Identifikations- Bezahl- und Ticketing-Funktionen verbindet. Darüber hinaus kann es als Knotenpunkt für drahtlose Smart Building-Netzwerke dienen.

### Abbildungen:

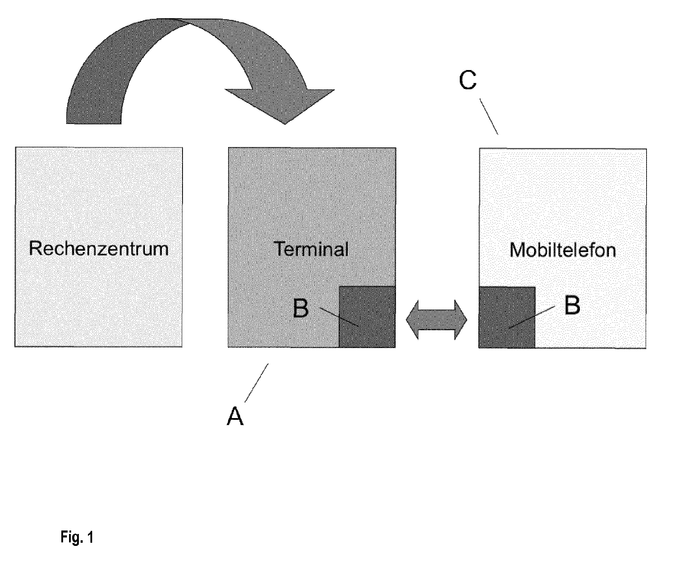

Die Erfindung wird nachfolgend anhand der Fig. 1 bis Fig. 3 näher beschrieben. Es zeigen:
- Fig. 1: das erfindungsgemäße Terminal zur sicheren Übertragung einer Nutzer-Identifizierung über ein Weitverkehrsnetz zwischen Terminal und Rechenzentrum, welche zuvor durch Paarung eines mobilen Endgerätes mit dem erfindungsgegenständlichen Terminal auf Basis des NCF-Standards gewonnen wurde.

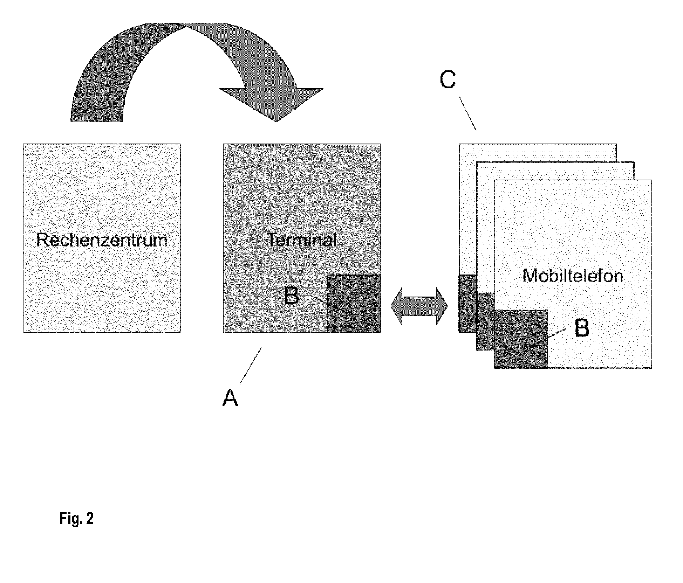

- Fig. 2: das erfindungsgemäße Terminal zur sicheren Übertragung eines Bezahlvorgangs über ein Weitverkehrsnetz zwischen Terminal und Rechenzentrum, welcher zuvor durch Paarung eines mobilen Endgerätes mit dem erfindungsgegenständlichen Terminal auf Basis des NCF-Standards gewonnen wurde.

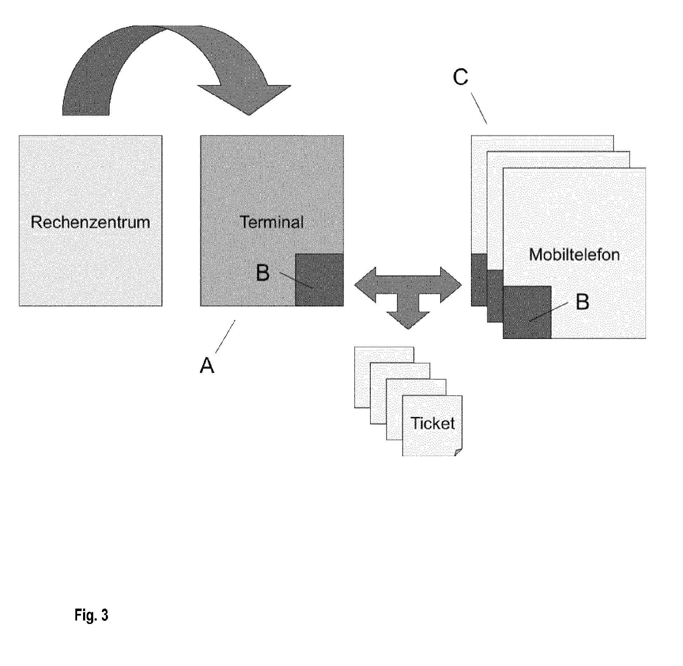

- Fig. 3: das erfindungsgemäße Terminal zur sicheren Übertragung eines papierlosen Tickets über ein Weitverkehrsnetz zwischen Terminal und Rechenzentrum, welches anschließend durch Paarung eines mobilen Endgerätes mit dem erfindungsgegenständlichen Terminal auf Basis des NCF-Standards an den Kunden übermittelt wird.

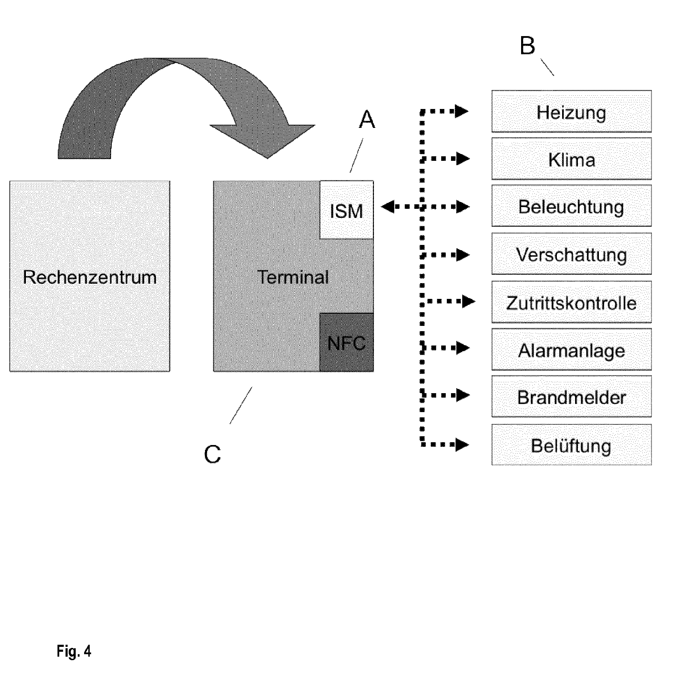

- Fig. 4: das erfindungsgemäße Terminal zur sicheren Übertragung eines Steuerungs- bzw. Abfragevorgangs über ein Weitverkehrsnetz zwischen Terminal und Rechenzentrum, welcher anschließend durch das erfindungsgegenständliche Terminal mit Hilfe eines geeigneten ISM-Bandes drahtlos an die gebäudebezogenen Systeme der Heizungs-Klima- und Beleuchtungstechnik weitergeleitet wird.

In Fig. 1 findet sich ein Ausführungsbeispiel des erfindungsgemäßen Terminals (A) mit einem NFC-fähigen Datenübertragungssystem (B) zur Identifizierung des Nutzers durch Paarung mit einem mobilen Endgerät z.B. Mobiltelefon (C). Die beiden NFC-Partner versenden Datenpakete auf einer Frequenz von 13,56 MHz über einen Distanz von max. 10 Zentimetern.

In Fig. 2 findet sich ein Ausführungsbeispiel des erfindungsgemäßen Terminals (A) mit einem NFC-fähigen Datenübertragungssystem für Bezahlfunktionen (B) durch Paarung einem mobilen Endgerät, z.B. Mobiltelefon (C).

In Fig. 3 findet sich ein Ausführungsbeispiel des erfindungsgemäßen Terminals (A) mit einem NFC-fähigen Datenübertragungssystem für die Erzeugung papierloser Tickets (B) durch Paarung mit einem mobilen Endgerät, z.B. Mobiltelefon (C).

In Fig. 4 findet sich ein Ausführungsbeispiel des Terminals und dem erfindungsgemäßen Datenübertragungssystems (A) für ein gebäudebezogenes Funknetzwerk. Die Komponenten der gebäudebezogenen Versorgungstechnik (B) kommunizieren mit dem Terminal (C) beispielsweise auf einer ISM-Frequenz von 868 MHz über eine lokale Distanz von bis zu 35 Metern.

## Patentansprüche

1. System zur Datenübermittlung in einem Weitverkehrsnetz zwischen einem Rechenzentrum und einem Terminal
**dadurch gekennzeichnet, dass**
ein sicherer Datenaustausch zwischen Terminal und Rechenzentrum erst nach Identifizierung des Nutzers durch Paarung eines NFC-fähigen, mobilen und personenindividuellen Endgerätes mit dem erfindungsgegenständlichen Terminal erfolgen kann.

2. System zur Datenübermittlung in einem Weitverkehrsnetz zwischen einem Rechenzentrum und einem Terminal
**dadurch gekennzeichnet, dass**
eine gesicherte Bezahlfunktion zwischen Terminal und Rechenzentrum erst nach Authorisierung des Kunden durch Paarung eines NFC-fähigen, mobilen und personenindividuellen Endgerätes mit dem erfindungsgegenständlichen Terminal erfolgen kann.

3. System zur Datenübermittlung in einem Weitverkehrsnetz zwischen einem Rechenzentrum und einem Terminal
**dadurch gekennzeichnet, dass**
ein papierloses Ticket durch Paarung eines NFC-fähigen, mobilen und personenindividuellen Endgerätes mit dem erfindungsgegenständlichen Terminal erzeugt und an den Kunden übertragen werden kann, welches zuvor aus dem Rechenzentrum übertragen wurde.

4. Terminal zur Datenübermittlung in einem Weitverkehrsnetz zwischen einem Rechenzentrum und einem Terminal
**dadurch gekennzeichnet, dass**
das erfindungsgegenständliche Terminal eine Datenübertragungsfunktion gemäß NFC-Standard aufweist.

5. Terminal zur Datenübermittlung in einem Weitverkehrsnetz zwischen einem Rechenzentrum und einem Terminal
**dadurch gekennzeichnet, dass**
das erfindungsgegenständliche Terminal eine drahtlose Datenübertragungsfunktion nach NFC-Standard aufweist und sein metallisches Gehäuse zur Regulierung der Übertragungsreichweite nutzt.

6. Terminal zur Datenübermittlung in einem Weitverkehrsnetz zwischen einem Rechenzentrum und einem Terminal
**dadurch gekennzeichnet, dass**
das erfindungsgegenständliche Terminal eine drahtlose Datenübertragungsfunktion nach ISM-Standard aufweist und darüber Systeme der gebäudebezogenen Versorgungstechnik sowie der Zutrittskontrolle und Einbruchsmeldetechnik steuern kann.

7. Terminal zur Datenübermittlung in einem Weitverkehrsnetz zwischen einem Rechenzentrum und einem Terminal
**dadurch gekennzeichnet, dass**
die in das erfindungsgegenständliche Terminal integrierte NFC-Datenübertragungsfunktion verbindungslos nach ISO 14442 oder ISO 15693 erfolgt.

8. Terminal zur Datenübermittlung in einem Weitverkehrsnetz zwischen einem Rechenzentrum und einem Terminal
**dadurch gekennzeichnet, dass**
die in das erfindungsgegenständliche Terminal integrierte NFC-Datenübertragungsfunktion verbindungsbehaftet zwischen gleichwertigen aktiven Transmittern erfolgt.
